# EUROPEAN PATENT SPECIFICATION

(11) **EP 4 119 444 B1**
(45) Date of publication and mention of the grant of the patent: **30.10.2024**
(21) Application number: 21382633.2
(22) Date of filing: 13.07.2021
(51) Int. Cl.: B64D 33/08, B64D 27/24

(54) **METHOD FOR COOLING AN ELECTRICAL AIRCRAFT PROPULSION SYSTEM**
VERFAHREN ZUR KÜHLUNG EINES ELEKTRISCHEN FLUGZEUGANTRIEBSYSTEMS
PROCÉDÉ DE REFROIDISSEMENT POUR UN SYSTÈME DE PROPULSION ÉLECTRIQUE D'AÉRONEF

(43) Date of publication of application: 18.01.2023
(73) Proprietor: Airbus Operations, S.L.U., 28906 Getafe (Madrid) (ES)
(72) Inventor: BUENO VAZQUEZ, Carlos, 28906 Getafe (Madrid) (ES); MOLANO REMBIASZ, Jorge, 28906 Getafe (Madrid) (ES); XU XU, Ji, 28906 Getafe (Madrid) (ES)
(74) Representative: Herrero & Asociados, S.L.

(56) References cited:
- DE-A1- 102015 100 186
- US-A1- 2007 248 861
- US-A1- 2011 076 584
- US-A1- 2013 206 910
- US-A1- 2020 303 789

## Description

The present invention refers to a cooling method for an electrical aircraft propulsion system, that applies to the procedures to be performed by the thermal management controller or the crew before take-off phase.

### Background of the invention

Before and during the taking-off of an aircraft the electrical propulsion system of the aircraft must be cooled to prevent damages.

For this cooling, the aircraft comprises channels through which ram air flows.

After the aircraft takes-off, the speed of the aircraft improves the air flow through ram air channels.

The sizing of these ram air channels is important because it is necessary to find a balance between the cooling needs before, during and after the taking-off of the aircraft.

If the sizing of these ram air channels is reduced, it would affect the cooling before and during the taking-off, and if the sizing of these ram air channels is increased, it penalizes the global performance of the aircraft, leading to an inefficient design.

US 2020/303789 A1 discloses a method for controlling a thermal management system for an air vehicle, which includes determining an expected fluid temperature of fluid in a fluid heat exchange circuit. The method further includes commanding a flow restrictor at least partially closed or commanding the flow restrictor at least partially open.

### Description of the invention

Therefore, one purpose of the present invention is to provide a cooling method for an electrical aircraft propulsion system, which permits to optimize the size the ram air channels in all the phases of the operation of the aircraft, before, during and after the taking-off.

With the cooling method according to the present invention it is possible to solve said drawbacks, providing other advantages that are described below.

A cooling system for an electrical aircraft propulsion system comprises:
- an energy source that drives the propulsion system,
- one or more heat exchangers for cooling a coolant, said one or more heat exchangers being connected to said energy source by a coolant circuit,
- one or more air channels inside which the one or more heat exchangers are placed,
wherein said coolant circuit comprises a bypass portion that:
- recirculates the coolant to the energy source; or
- circulates the coolant from the energy source to the one or more heat exchangers.

According to the present invention, a the- method for cooling an electrical aircraft propulsion system is defined in claim 1, and comprises the steps of:
- decreasing the temperature of a portion of a coolant below an operating temperature, acting this portion of the coolant as a thermal buffer, and
- maintaining the rest of the coolant at said operation temperature.

The decreasing the temperature of a portion of a coolant below an operating temperature is made before the taking-off of the aircraft, and this portion of the coolant acts as a thermal buffer during the taking-off of the aircraft.

Furthermore, the decreasing of the temperature of a portion of the coolant at the operation temperature and the maintenance of the rest of the coolant at the operation temperature is preferably carried out bypassing said rest of the coolant.

According to a preferred embodiment, the decreasing of the temperature is made by one or more heat exchangers.

The objective of this patent is to provide a a method which enhances the cooling capabilities of the cooling system during the take-off phase, especially during the beginning of this phase, when the aircraft speed is very limited.

The principle to alleviate the sizing of the ram air channels is overcooling the coolant of the thermal management system while keeping the operating temperature of the fuel cell, in order to not penalize its performance or reliability.

Then, this extra cold temperature of the coolant provides a thermal buffer during the first part of the take-off phase, and therefore delaying the sizing of the ram air channels to a point where the aircraft speed is higher, and therefore less demanding for the ram air channels.

### Brief description of the drawings

For a better understanding the above explanation and for the sole purpose of providing an example, some non-limiting drawings are included that schematically depict a practical embodiment.

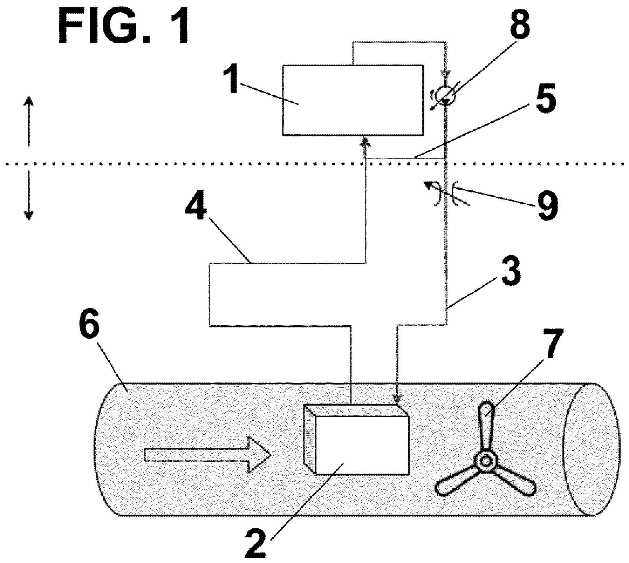

Figure 1 is a diagrammatical view of the components forming part of a cooling system for carrying out the cooling method according to the present invention.

### Description of a preferred embodiment

The cooling system for carrying the cooling method according to the present invention is diagrammatically shown in Fig. 1.

An electrical aircraft propulsion system requires a cooling system to remove the heat generated by the energy source, such as, e.g. fuel cells.

The cooling system comprises an energy source 1 that drives the propulsion system, such as a fuel cell, and one or more heat exchangers 2 for cooling a coolant.

Said one or more heat exchangers 2 are connected to said energy source 1 by a coolant circuit inside which a coolant circulates. In particular, said coolant circuit comprises a portion 3 from the fuel cell 1 to the heat exchanger 2, a portion 4 from the heat exchanger 2 to the fuel cell 1, and a bypass portion 5 that defines a loop from and to the fuel cell 1 (fuel cell loop) and a loop from and to the heat exchanger 2 (heat exchanger loop).

Furthermore, the cooling system comprises one or more air channels 6 inside which the one or more heat exchangers 2 and one or more fans 7 are placed. The one or more heat exchangers 2 and the fan or fans 7 permit to cool the coolant generating an air flow through the heat exchanger 2.

Said bypass portion 5 of the coolant circuit permits to recirculate the coolant to the energy source, o to circulate the coolant from the energy source to the one or more heat exchangers.

In the loop defined bypass portion 5 there is provided a variable speed pump 8, that regulates fast enough the inlet temperature and mass flow through the fuel cell 1.

Furthermore, the portion 3 of the coolant circuit from the fuel cell 1 to the heat exchanger 2 comprises a switch 9 for opening and closing the passage for coolant through this portion 3 of the coolant circuit.

When a fuel cell 1 is used to generate propulsive energy to the aircraft, since the fuel cell 1 generates a lot of heat, ambient temperature can be very hot, and the aircraft speed is very limited.

If the cooling system is sized to cover this flight phase, the resulting air channel size is significantly big, and the objective of the present invention is to decrease its size.

By this bypass portion 5 in the coolant circuit, the temperature of a portion of a coolant can be decreased below an operating temperature, acting this portion of the coolant as a thermal buffer, maintaining the rest of the coolant at said operation temperature.

In particular, in the method of the present invention, according to the shown embodiment, the fan or fans 7 can be operated in order to decrease the coolant temperature below the operating temperature of the fuel cell 1 before the take-off phase.

As a consequence, the coolant will be bypassed at fuel cell loop in order to maintain the fuel cell operating temperature, whereas the coolant in the heat exchanger loop decreases its temperature. This volume of coolant at lower temperature acts as a thermal buffer during the take-off phase.

When the take-off phase starts, the temperature of the coolant in the heat exchanger loop increases until it reaches approximately the operating temperature of the fuel cell 1.

The benefit of this method is the time required by the coolant of the heat exchanger loop to reach the operating temperature of the fuel cell 1. This extra time allows the aircraft to start the take-off procedure and therefore increase the aircraft speed before the coolant is at the fuel cell operating temperature.

The optimum temperature to be achieved by the coolant of the heat exchanger loop shall be determined in order to identify the optimum solution in terms of fan power requirement vs air channel size and air channel drag during the take-off phase.

Even though reference has been made to a specific embodiment of the invention, it is obvious for a person skilled in the art that the cooling method described herein is susceptible to numerous variations and modifications as long as they fall within the scope of protection defined by the attached claims.

## Claims

1. Method for cooling an electrical aircraft propulsion system, comprising the steps of:
- decreasing the temperature of a portion of a coolant below an operating temperature, acting this portion of the coolant as a thermal buffer, and
- maintaining the rest of the coolant at said operation temperature,
**characterized in that** the decreasing the temperature of a portion of a coolant below an operating temperature is made before the taking-off of the aircraft, and this portion of the coolant acts as a thermal buffer during the taking-off of the aircraft.

2. Method for cooling an electrical aircraft propulsion system according to claim 1, wherein the decreasing of the temperature of a portion of the coolant at the operation temperature and the maintenance of the rest of the coolant at the operation temperature is carried out bypassing said rest of the coolant.

3. Method for cooling an electrical aircraft propulsion system according to any one of previous claims, wherein the decreasing of the temperature is made by one or more heat exchangers (2).

## Patentansprüche

1. Verfahren zur Kühlung eines elektrischen Flugzeugantriebssystems, das die folgenden Schritte umfasst:
- Absenkung der Temperatur eines Teils eines Kühlmittels unter eine Betriebstemperatur, wobei dieser Teil des Kühlmittels als Wärmepuffer dient, und
- Haltung des Rests des Kühlmittels auf der genannten Betriebstemperatur,
**dadurch gekennzeichnet, dass** das Absenken der Temperatur eines Teils eines Kühlmittels unter eine Betriebstemperatur vor dem Start des Flugzeugs erfolgt und dieser Teil des Kühlmittels während des Starts des Flugzeugs als Wärmepuffer wirkt.

2. Verfahren zur Kühlung eines elektrischen Flugzeugantriebssystems nach Anspruch 1, wobei die Absenkung der Temperatur eines Teils des Kühlmittels auf die Betriebstemperatur und die Aufrechterhaltung des Rests des Kühlmittels auf der Betriebstemperatur unter Umgehung des Rests des Kühlmittels durchgeführt wird.

3. Verfahren zur Kühlung eines elektrischen Flugzeugantriebssystems nach einem der vorhergehenden Ansprüche, wobei die Temperaturabsenkung durch einen oder mehrere Wärmetauscher (2) erfolgt.

## Revendications

1. Procédé de refroidissement d'un système de propulsion électrique avion, comprenant les étapes suivantes :
- diminuer la température d'une partie du liquide de refroidissement en dessous d'une température de fonctionnement, cette partie du liquide de refroidissement jouant le rôle de tampon thermique, et
- maintenir le reste du liquide de refroidissement à ladite température de fonctionnement, **caractérisée en ce que** la diminution de la température d'une partie du liquide de refroidissement en dessous d'une température de fonctionnement est effectuée avant le décollage de l'avion, et que cette partie du liquide de refroidissement agit comme un tampon thermique pendant le décollage de l'avion.

2. Procédé de refroidissement d'un système de propulsion électrique d'avion selon la revendication 1, dans lequel la diminution de la température d'une partie du liquide de refroidissement à la température de fonctionnement et le maintien du reste du liquide de refroidissement à la température de fonctionnement s'effectuent en contournant le reste du liquide de refroidissement.

3. Procédé de refroidissement d'un système de propulsion électrique d'avion selon l'une quelconque des revendications précédentes, dans lequel la diminution de la température est réalisée par un ou plusieurs échangeurs de chaleur (2)
